# EUROPÄISCHE PATENTSCHRIFT

(11) **EP 2 074 980 B1**
(45) Veröffentlichungstag und Bekanntmachung des Hinweises auf die Patenterteilung: **27.03.2013**
(21) Anmeldenummer: 09004658.2
(22) Anmeldetag: 19.01.2007
(51) Int. Cl.: A61H 3/06, G09B 21/00

(54) **Mobilitätshilfsanordnung**
Mobility aid apparatus
Dispositif d'aide à la mobilité

(30) Priorität: 20.01.2006 DE 202006000980 U
(43) Veröffentlichungstag der Anmeldung: 01.07.2009
(62) Teilanmeldung aus: 07001130.9
(73) Patentinhaber: Stichting ontwikkeling en vervaardiging van hulpmiddelen voor visueel gehandicapten, 6369 EM Simpelveld (NL)
(72) Erfinder: Grooten, Hubert, 6369 EM Simpelveld (NL)
(74) Vertreter: Gottschald, Jan

(56) Entgegenhaltungen:
- WO-A-97/15265
- DE-A1- 19 517 649
- DE-A1-102004 042 884
- GB-A- 2 320 315
- US-A- 3 736 551
- US-A- 5 047 952
- "Hauptkatalog 2005/2006" 2005, CONRAD ELECTRONIC GMBH , XP002440409 * Seite 733 *

## Beschreibung

Die Erfindung betrifft eine tragbare Mobilitätshilfsanordnung mit einem tragbaren Anzeigegerät zur haptischen Anzeige und. ggf. Eingabe von Orientierungsinformationen - Slavegerät - und einem weiteren tragbaren Gerät zur haptischen Eingabe und ggf. Anzeige von Orientierungsinformationen - Mastergerät - gemäß Anspruch 1 sowie eine Verwendung einer solchen Mobilitätshilfsanordnung gemäß Anspruch 4.

In vielen Bereichen liegen keine hinreichenden visuellen Orientierungsinformationen vor, um eine vorbestimmte Wegstrecke sicher zu Fuß ablaufen oder mit einem Hilfsmittel abfahren zu können. Der hier im Vordergrund stehende Anwendungsfall betrifft in erster Linie die Mobilität von behinderten, insbesondere sehbehinderten Personen. Ein anderer Bereich ist beispielsweise das Zurechtfinden von Feuerwehrleuten in einem brennenden Gebäude bei hoher Rauchentwicklung, die die Sicht behindert. Es sind andere Anwendungsfälle denkbar. Im Folgenden wird ausschließlich der Anwendungsfall der sehbehinderten Person behandelt, was nicht beschränkend zu verstehen ist.

Mit "Orientierungsinformationen" sind allgemein die Informationen gemeint, die dem Benutzer das Zurechtfinden in der jeweiligen Umgebung ermöglichten. Hierbei kann es sich beispielsweise um Richtungsinformationen oder Oberflächeninformationen in bezug auf die Umgebung handeln. Auch Informationen über die Gefahr einer Kollision mit anderen Objekten o. dg1. sind hiervon umfasst. Anhand der Orientierungsinformationen passt der Benutzer seine Bewegungsrichtung entsprechend an.

Informationen, die an sich visuell vorliegen, lassen sich auch jedenfalls zum Teil in hörbarer Form und zum Teil in haptischer Form anzeigen. Beispielsweise kann die Information über die Gefahr einer Kollision über Sprachausgabe angezeigt werden. Gleichzeitig kann über die haptische Anzeige eine Information darüber gegeben werden, in welcher Richtung ein Ausweichmanöver durchzuführen ist.

Mit "haptischer" Anzeige ist vorliegend eine Anzeige gemeint, bei der die anzuzeigenden Informationen in ertastbarer Weise vorliegen. Hierfür ist in der Regel ein Aktuator vorgesehen, der den zu übertragenden Informationen entsprechende Kräfte oder Bewegungen an den Benutzer überträgt.

Es sind eine ganze Reihe von tragbaren Anzeigegeräten zur haptischen Anzeige von Orientierungsinformationen bekannt, die den obigen Bedürfnissen jedenfalls zum Teil Rechnung tragen. Alle bekannten Anzeigegeräte werden im Rahmen einer tragbaren Mobilitätshilfe eingesetzt, die mindestens ein Funktionsmodul zur Bereitstellung der anzuzeigenden Informationen und das Anzeigegerät selbst aufweisen. Typische Funktionsmodule sind hier Sensoren wie punktuelle oder scannend messende Entfernungssensoren, GPS-Sensoren o. dgl.

Ein bekanntes Anzeigegerät gibt die anzuzeigenden Informationen in Blindenschrift wieder. Hierfür sind stiftartige Tastelemente in einer Fläche vorgesehen, die mittels einer Antriebsanordnung unabhängig voneinander linear verstellbar sind. Je nach Ansteuerung stehen die Tastelemente aus der Fläche hervor oder sind in der Fläche versenkt. Mit einer solchen Matrix von Tastelementen lässt sich Blindenschrift elektronisch erzeugen. Nachteilig ist die Tatsache, dass die Informationsübermittlung hier vergleichsweise langsam vonstatten geht. Ferner erfordert eine solche haptische Anzeige ein hohes Maß an Konzentration des Benutzers, so dass die Anzeige wenig komfortabel ist.

Bei einem weiteren bekannten Anzeigegerät ist das Tastelement zur haptischen Anzeige von Orientierungsinformationen mittels einer Antriebsanordnung relativ zu einem Gehäuse um eine Hochachse verschwenkbar. Orientierungsinformationen, die über Richtungsinformätionen hinausgehen, lassen sich hiermit haptisch nicht anzeigen. Hierfür muss zusätzlich beispielsweise auf Sprachausgabe o. dgl. zurückgegriffen werden. Hiermit lässt sich eine schnelle und intuitive Übermittlung komplexer Orientierungsinformationen nicht realisieren.

Weitere Anzeigegeräte zur haptischen Anzeige von Orientierungsinformationen sind aus der WO 97/15265 A1 und der DE 10 2004 042 884 A1 bekannt.

Es sind auch Mobilitätshilfsanordnungen bekannt geworden, bei denen ein tragbares haptisches Anzeigegerät zur Anzeige von Orientierungsinformationen über ein Sendegerät ferngesteuert wird (US 3,736,551 A, welche die Merkmale des Oberbegriffs von Anspruch 1 offenbart). Dabei ist das Sendegerät gegenüber dem tragbaren Anzeigegerät im Wesentlichen stationär angeordnet.

Schließlich sind aus dem Bereich der Kommunikationssysteme für sehbehinderte Personen Datenhandschuhe bekannt geworden, mit denen sich Nachrichten taktil übertragen lassen (US 5,047,952, DE 195 17 649 A1, GB 2 320 315 A).

Der Erfindung liegt das Problem zugrunde, eine Mobilitätshilfsanordnung mit einem Anzeigegerät zur haptischen Anzeige zur Verfügung zu stellen, welches Orientierungsinformationen einer Begleitperson dem Benutzer anzeigt.

Das obige Problem wird durch eine Mobilitätshilfsanordnung gemäß Anspruch 1 gelöst.

Wesentlich ist, dass das Slavegerät und das Mastergerät zur Anzeige bzw. Eingabe von Orientierungsinformationen jeweils ein Tastelement aufweisen und wobei sich das Tastelement des Slavegeräts durch eine manuelle, benutzergeführte Verstellung des Tastelements des Mastergeräts ferngesteuert motorisch verstellen lässt.

Nach der vorschlagsgemäßen Lehre ist ein tragbares Anzeigegerät zur haptischen Anzeige und gegebenenfalls Eingabe von Orientierungsinformationen - Slavegerät - und ein weiteres tragbares Gerät zur haptischen Eingabe und gegebenenfalls Anzeige von Orientierungsinformationen - Mastergerät - vorgesehen. Dabei ist die Anordnung so getroffen, dass sich das Tastelement des Slavegeräts durch eine manuelle, benutzergeführte Verstellung des Tastelements des Mastergeräts ferngesteuert motorisch verstellen lässt.

Eine solche Anordnung bietet beispielsweise dann besondere Vorteile, wenn eine sehbehinderte Person von einer nicht sehbehinderten Person geführt werden soll. Die Führungsinformation wird von der nicht sehbehinderten Person über das Tastelement in das Mastergerät eingegeben. Das Mastergerät überträgt diese Information vorzugsweise drahtlos auf das Slavegerät, welches die Führungsinformation über dessen Tastelement haptisch an die sehbehinderte Person weitergibt.

Nach der vorschlagsgemäßen Lehre ist das Führen einer sehbehinderten Person möglich, ohne dass ein Körperkontakt notwendig ist. Beispielsweise kann sich die nicht sehbehinderte Person in einiger Entfernung der sehbehinderten Person befinden. Dies erhöht den Freiheitsgrad der sehbehinderten Person bei deren Bewegung, ohne dass aufwendige Sensorik realisiert werden muss.

Erfindungsgemäß sind die Tastelemente von Master- und Slavegerät schwenkbar. Für die Anzeige von Orientierungsinformationen ist das Verschwenken eines Tastelements um eine Hochachse besonders vorteilhaft. Das Tastelement kann beispielsweise nach Art eines Pfeils oder einer Kompassnadel ausgestaltet sein und ermöglicht so eine besonders intuitive Anzeige der gewünschten Informationen.

Ferner ist es so, dass das motorische Verschwenken eines Tastelements konstruktiv in besonders einfacher Weise realisierbar ist. Dadurch lassen sich die Kosten für das tragbare Anzeigegerät reduzieren.

Weiter ist es vorzugsweise vorgesehen, dass das Tastelement mittels der Antriebsanordnung sowohl um eine Hochachse als auch um eine Querachse verschwenkbar ist. Dabei ist die Hochachse im Gebrauch vorzugsweise im Wesentlichen vertikal ausgerichtet und die Querachse im Gebrauch im Wesentlichen horizontal ausgerichtet.

Mit den beiden Bewegungs-Freiheitsgraden des Tastelements, nämlich einerseits dem Verschwenken um die Hochachse und andererseits dem Verschwenken um die Querachse lassen sich umfangreiche Informationen an den Benutzer übertragen. Beispielsweise kann das Verschwenken um die Hochachse der Anzeige von Richtungsinformationen und das Verschwenken um die Querachse der Anzeige von Oberflächen- und Kollisionsinformationen dienen. Dabei ist die Querachse vorzugsweise im Wesentlichen senkrecht zur Bewegungsrichtung des Benutzers ausgerichtet.

Es kann zusätzlich oder alternativ auch vorgesehen sein, dass das Tastelement um eine Längsachse schwenkbar ist. Dies kann insbesondere vorteilhaft sein, wenn dem Benutzer eine seitliche Richtung angezeigt werden soll, die keine Komponenten in der Bewegungsrichtung aufweist. Die Längsachse ist vorzugsweise im Wesentlichen in der Bewegungsrichtung des Benutzers ausgerichtet.

Bei einer bevorzugten Ausgestaltung weist das Tastelement eine Tastfläche auf, an der wiederum ein auf der Tastfläche ertastbarer Tastkörper an.geordnet ist. Der Tastkörper stellt gewissermaßen eine ertastbare Markierung auf der Tastfläche dar.

Nach einer weiteren Lehre gemäß Anspruch 4 wird die Verwendung der vorschlagsgemäßen Mobilitätshilfsanordnung zur Führung einer sehbehinderten Person durch eine nicht-sehbehinderte Person als solche beansprucht.

Wesentlich ist nach dieser weiteren Lehre, dass das Slavegerät für die Bedienung durch die sehbehinderte Person und das Mastergerät für die Bedienung durch die nicht-sehbehinderte Person vorgesehen ist.

Weitere Vorteile, Merkmale und vorteilhafte Ausgestaltungen lassen sich der Zeichnung entnehmen. Es zeigt
- Fig. 1: ein tragbares Anzeigegerät in einer perspektivischen Ansicht und
- Fig. 2: das tragbare Anzeigegerät gemäß Fig. 1 in einer Explosionsdarstellung.

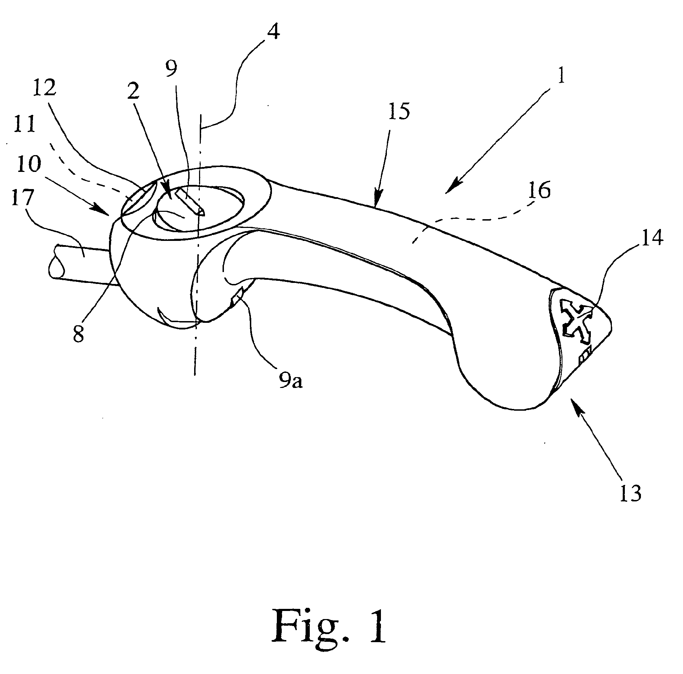

Das in Fig. 1 dargestellte tragbare Anzeigegerät zur haptischen Anzeige von Orientierungsinformationen ist mit einem Gehäuse 1 und einem Tastelement 2 ausgestattet. Das Tastelement 2 ist relativ zum Gehäuse 1 verstellbar, wobei eine Antriebsanordnung 3 zum motorischen Verstellen des Tastelements 2 vorgesehen ist. Die Anordnung ist so getroffen, dass ein motorisches Verstellen des Tastelements 2 ertastbar ist und dadurch eine Orientierungsinformation haptisch anzeigbar ist.

Das Tastelement 2 zur haptischen Anzeige von Orientierungsinformationen ist mittels der Antriebsanordnung 3 relativ zum Gehäuse 1 verschwenkbar. Die hiermit verbundenen Vorteile wurden im allgemeinen Teil der Beschreibung erläutert.

Das Tastelement 2 ist mittels der Antriebsanordnung 3 um eine Hochachse 4 verschwenkbar. In bevorzugter Ausgestaltung dient das Verschwenken des Tastelements 2 um die Hochachse 4 der haptischen Anzeige von Richtungsangaben. Ferner ist es vorgesehen, dass das Tastelement 2 mittels der Antriebsanordnung 3 um eine Querachse 5 verschwenkbar ist. Das Verschwenken des Tastelements 2 um die Querachse 5 dient vorzugsweise der haptischen Anzeige von Kollisions- und/oder Oberflächenangaben. Bei dem dargestellten Ausführungsbeispiel ist sowohl ein Verschwenken des Tastelements 2 um die Hochachse 4 als auch ein Verschwenken des Tastelements 2 um die Querachse 5 vorgesehen.

In bevorzugter Ausgestaltung ist die Hochachse 4 im Gebrauch im Wesentlichen vertikal ausgerichtet und die Querachse 5 im Gebrauch im Wesentlichen horizontal ausgerichtet. Dabei ist die Querachse 5 vorzugsweise senkrecht zur Bewegungsrichtung des Benutzers ausgerichtet. Dies hat eine besonders intuitive Anzeige zur Folge. Die Anzeige von Richtungsinformationen erfolgt dann nämlich nach Art einer Kompassnadel. Das Verschwenken des Tastelements 2 um die Querachse 5 wird vom Benutzer gedanklich mit einer Oberflächenneigung verbunden, wodurch sich Oberflächen- und Kollisionsinformationen vorteilhaft anzeigen lassen.

In einer nicht dargestellten bevorzugten Ausgestaltung ist das Tastelement 2 zusätzlich oder alternativ mittels der Antriebsanordnung 3 um eine Längsachse verschwenkbar. Die Längsachse ist vorzugsweise im Wesentlichen in der Bewegungsrichtung des Benutzers ausgerichtet. Hiermit lassen sich auch Richtungen senkrecht zur Bewegungsrichtung, also gewissermaßen Parallelverschiebungen im Hinblick auf die Bewegungsrichtung des Benutzers, anzeigen, die keine Komponente in Bewegungsrichtung aufweisen, was bei Ausweichmanövern vorteilhaft sein kann.

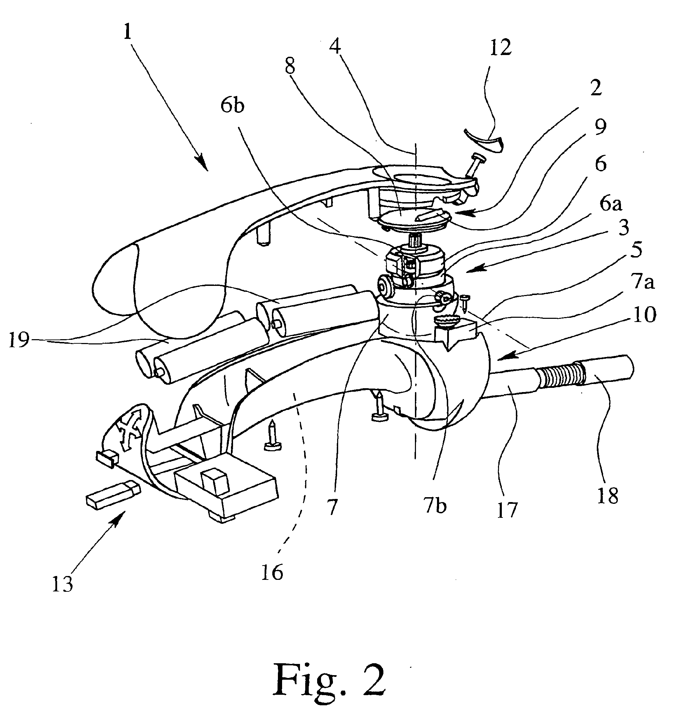

Eine konstruktiv besonders einfache Ausgestaltung ergibt sich dadurch, dass das Tastelement 2 in einem ersten Lager 6 um die Hochachse 4 schwenkbar gelagert ist und dass das erste Lager 6 in einem zweiten Lager 7 um die Querachse 5 schwenkbar gelagert ist. Dieses "Ineinanderschachteln" der beiden Lager 6, 7 führt zu einer besonders kompakten Anordnung, wie Fig. 2 zu entnehmen ist.

Bei der in Fig. 2 dargestellten bevorzugten Ausgestaltung ist ein erster Antriebsmotor 6a für das motorische Verschwenken des Tastelements 2 um die Hochachse 4 und ein zweiter Antriebsmotor 7a für das Verschwenken des Tastelements 2 um die Querachse 5 vorgesehen. Bei den Antriebsmotoren 6a, 7a kann es sich um rotatorische Elektromotoren, um Solenoide o. dgl. handeln. Dabei treibt der erste Antriebsmotor 6a ein Ritzel 6b an, das unmittelbar mit dem Tastelement 2 verbunden ist. Das Tastelement 2 und der erste Antriebsmotor 6a befinden sich auf einem im zweiten Lager 7 gelagerten Träger, der mit einem Ritzel 7b verbunden ist. Das Ritzel 7b steht in antriebstechnischer Verbindung mit dem zweiten Antriebsmotor 7a.

Es sind auch andere konstruktive Varianten für die Realisierung der oben genannten Bewegungs-Freiheitsgrade sowie der motorischen Verstellung des Tastelements 2 denkbar. Besonders einfach zu realisieren ist die Lagerung des Tastelements 2 nach Art einer Kugel-Kugelpfannen-Lagerung. Dann ist das Tastelement 2 selbst oder eine mit dem Tastelement 2 verbundene Komponente jedenfalls zum Teil kugelförmig ausgestaltet. Damit lässt sich auf einfache Weise die oben beschriebene Verschwenkbarkeit um die Längsachse realisieren. Bei einer solchen Lagerung ist grundsätzlich eine motorische Verstellung des Tastelements 2 nach Art eines "inversen" Track-Balls denkbar. Mit "invers" ist hier gemeint, dass der Ball des Track-Balls nicht wie eigentlich üblich der Eingabe, sondern durch entsprechenden Antrieb durch die Antriebsanordnung 3 der Anzeige von Orientierungsinformationen dient. Die Bewegung des Tastelements 2 ist dann gewissermaßen in jeglicher Richtung möglich. Bei einer solchen Ausgestaltung ist die Realisierung der Antriebsanordnung 3 nach Art eines Kugelmotors denkbar.

Die Lagerung des obigen zum Teil kugelförmigen Tastelements 2 kann auch in anderer Weise erfolgen, beispielsweise durch entsprechend angeordnete Lagerkugeln o. dgl.. Wesentlich ist bei einer solchen Ausgestaltung letztlich nur die Tatsache, dass das Tastelement 2 zum Teil kugelförmig ist.

Von besonderer Bedeutung ist hier die Ausgestaltung des Tastelements 2, da das Tastelement 2 maßgeblich für eine schnelle und intuitive Anzeige der gewünschten Orientierungsinformationen ist.

Das Tastelement 2 weist eine vorzugsweise stetig verlaufende Tastfläche 8 auf. Dies bedeutet, dass die Tastfläche 8 für sich genommen vorzugsweise keine ertastbaren Kanten o. dgl. aufweist. In bevorzugter Ausgestaltung ist es hier vorgesehen, dass an der Tastfläche 8 ein auf der Tastfläche 8 ertastbarer Tastkörper 9 angeordnet ist. Der Tastkörper 9 ermöglicht eine eindeutige haptische Anzeige der Verstellung des Tastelements 2. Hierfür ist der Tastkörper 9 als eine Erhebung auf der Tastfläche 8 oder als eine Vertiefung in der Tastfläche 8 ausgestaltet. Weitere Varianten zur Ausgestaltung des Tastkörpers 9 werden weiter unten gegeben.

Es lässt sich der Darstellung in Fig. 1 entnehmen, dass die Hochachse 4 hier durch die Tastfläche 8 hindurch verläuft und im Wesentlichen senkrecht zur Tastfläche 8 ausgerichtet ist. Dies ist insbesondere im Hinblick auf eine intuitive haptische Anzeige der Orientierungsinformationen von Vorteil.

Es ist der Darstellung in Fig. 1 ferner zu entnehmen, dass sich die Tastfläche 8 im Wesentlichen unmittelbar an das Gehäuse 1 anschließt, wobei die Tastfläche 8 hier innerhalb einer Ausnehmung des Gehäuses 1 angeordnet ist. Ein subjektiv besonders angenehmer Eindruck lässt sich dadurch erreichen, dass der Übergang von der Tastfläche 8 zum Gehäuse 1 im Wesentlichen stetig ist.

Für den subjektiven Eindruck ist insbesondere die Ausgestaltung der Tastfläche 8 von Bedeutung. Je nach Ausgestaltung des Anzeigegeräts im Übrigen kann es vorteilhaft sein, die Tastfläche 8 und vorzugsweise den angrenzenden Gehäuseabschnitt im Wesentlichen konkav auszugestalten. Denkbar ist aber auch die im Wesentlichen konvexe Ausgestaltung der Tastfläche 8 und vorzugsweise des angrenzenden Gehäuseabschnitts. Die Tastfläche 8 kann beispielsweise die Fläche einer Kugel sein. Ferner kann es vorteilhaft sein, die Tastfläche 8 und vorzugsweise den angrenzenden Gehäuseabschnitt im Wesentlichen eben, also nach Art einer Scheibe, auszugestalten. Die Tastfläche 8 und der angrenzende Gehäuseabschnitt können aber auch derart zueinander komplementär ausgestaltet sein, dass die Tastfläche 8 konvex und der angrenzende Gehäuseabschnitt konkav oder umgekehrt ausgestaltet sind.

Bei dem dargestellten Ausführungsbeispiel ist das Tastelement 2 um die Hochachse 4 einerseits und um die Querachse 5 andererseits schwenkbar ausgestaltet. Es kann alternativ oder zusätzlich auch sein, dass der Tastkörper 9 zur haptischen Anzeige von Orientierungsinformationen mittels der Antriebsanordnung 3 relativ zur Tastfläche 8, vorzugsweise senkrecht zur Tastfläche 8, verstellbar ist. Dabei ist es denkbar, dass der Tastkörper 9 senkrecht zur Tastfläche 8 verschwenkbar ist. Dadurch, dass hier eine Relativbewegung zwischen Tastfläche 8 und Tastkörper 9 realisiert ist, übernimmt der Tastkörper 9 gewissermaßen die Funktion eines nach vorne bzw. nach oben weisenden Pfeils o. dgl. Dies kann die intuitive Anzeige von Orientierungsinformationen weiter verbessern.

Es lässt sich der Darstellung in Fig. 1 ferner entnehmen, dass der Tastkörper 9 länglich ausgestaltet ist und hinsichtlich der Hochachse 4 radial angeordnet ist. Die längliche Ausgestaltung des Tastkörpers 9 verstärkt den subjektiven Eindruck, dass es sich bei dem Tastkörper 9 um einen Pfeil o. dgl. handelt. Um eine möglichst große Auslenkung des Tastkörpers 9 bei der Verstellung des Tastelements 2 zu erreichen, ist der Tastkörper 9 hinsichtlich der Verschwenkbarkeit um die Hochachse 4 außen am Tastelement 2 angeordnet. Damit lässt sich die Qualität der Anzeige von Orientierungsinformationen weiter verbessern.

Im dargestellten und insoweit bevorzugten Ausführungsbeispiel verläuft der Tastkörper 9 von der Hochachse 4 bis zum Außenrand des Tastelements 2. Es kann aber auch vorgesehen sein, dass der Tastkörper 9 durch die Hochachse 4 hindurch läuft. Grundsätzlich ist es auch denkbar, dass sich der Tastkörper 9 im Wesentlichen über die gesamte Breite der Tastfläche 8 erstreckt.

Es wurde bereits angedeutet, dass der Form des Tastkörpers 9 für die Qualität der Anzeige besondere Bedeutung zukommt. In bevorzugter Ausgestaltung ist der Tastkörper 9 im Querschnitt gesehen in Richtung der Hochachse spitz zulaufend ausgestaltet. Es ergibt sich eine ertastbare Kante, die entlang der Längserstreckung des länglichen Tastkörpers 9 verläuft. Dies ist bei dem in Fig. 1 dargestellten Ausführungsbeispiel der Fall.

Es kann aber auch vorgesehen sein, dass der Tastkörper 9 im Querschnitt gesehen rundlich ausgestaltet ist oder aber, dass der Tastkörper 9 im Querschnitt gesehen viereckig ausgestaltet ist. Versuche mit Probanten haben ergeben, dass eine eckige, insbesondere die spitz zulaufende Ausgestaltung des Tastkörpers zu besonders guten Ergebnissen bei der Anzeige von Orientierungsinformationen führt.

Eine besonders komfortable Ausgestaltung ergibt sich dadurch, dass die Tastfläche 8 eine nutartige Ausformung aufweist, die im Wesentlichen hinsichtlich der Hochachse 4 in radialer Richtung verläuft und derart an die Form eines menschlichen Fingers angepasst ist, dass der Finger im Wesentlichen formschlüssig in der nutartigen Ausformung positionierbar ist. Der menschliche Finger blokkiert dann gewissermaßen das Verschwenken des Tastelements 2. Die resultierende Kraftwirkung vom Tastelement 2 auf den menschlichen Finger ermöglicht eine komfortable und gleichzeitig intuitive Anzeige der gewünschten Orientierungsinformationen.

Die optimale Ausgestaltung des Tastelements 2 hängt wesentlich vom subjektiven Empfinden des Benutzers ab. Daher sind zahlreiche unterschiedliche Realisierungsmöglichkeiten für das Tastelement 2 denkbar. Entsprechend ist es vorteilhaft, wenn das Anzeigegerät insoweit modular ausgestaltet ist, dass unterschiedliche Tastelemente 2 zum Einsatz kommen können. Hierbei ist es vorzugsweise vorgesehen, dass der Austausch mit wenigen Handgriffen durch den Einsatz von Schnappverbindungen o. dgl. vonstatten geht. Grundsätzlich kann auch ein separater Austausch des Tastkörpers 9 vorgesehen sein.

Bei dem dargestellten Ausführungsbeispiel ist das Gehäuse 1 als Einhand-Griff ausgestaltet, wobei das Gehäuse 1 im Wesentlichen länglich ausgestaltet ist und von einer menschlichen Hand umgriffen werden kann. Das Gehäuse 1 weist hier eine Form auf, die landläufig als knochenartig bezeichnet werden kann. Alternativ oder zusätzlich kann es vorgesehen sein, dass das Anzeigegerät an einer weiteren Komponente, beispielsweise an einem Rollstuhl o. dgl. befestigbar ist.

Versuche mit Probanten haben ferner ergeben, dass der Daumen der menschlichen Hand für die Aufnahme haptischer Informationen besonders geeignet ist. Daher ist es in bevorzugter Ausgestaltung vorgesehen, dass bei Gebrauch das Tastelement 2 mit dem Daumen der das Gehäuse 1 greifenden Hand ertastbar ist.

Zur Eingabe von Informationen, beispielsweise zum softwaremäßigen Scrollen zwischen verschiedenen Menüoptionen, ist es vorgesehen, dass unterhalb des Gehäuses 1 ein Scroll-Rad 9a vorgesehen ist, das in unmittelbarer Nähe des Zeigefingers der das Gehäuse 1 greifenden Hand angeordnet und von dieser betätigbar ist.

Das tragbare Anzeigegerät kann neben der haptischen Anzeige von Orientierungsinformationen zahlreiche weitere Funktionen bereitstellen. Beispielsweise kann es vorgesehen sein, dass vorzugsweise am vorderen Ende 10 des Gehäuses 1 eine Kamera 11 angeordnet ist, deren Signale nach entsprechender Verarbeitung über das Tastelement 2 angezeigt werden können. In bevorzugter Ausgestaltung ist die Kamera 11 innerhalb des Gehäuses 1 angeordnet, wobei das Gehäuse 1 entsprechend einen transparenten Abschnitt 12 aufweist. Am vorzugsweise hinteren Ende 13 des Gehäuses 1 ist ggf. eine Schalteranordnung 14 angeordnet, die beispielsweise der Auswahl von Sensorfunktionen o. dgl. dienen kann.

Die haptische Anzeige von Orientierungsfunktionen über das Tastelement 2 ist wesentlich davon abhängig, in welcher Lage sich das tragbare Anzeigegerät jeweils befindet. Zur Ermittlung dieser Lage ist es vorgesehen, dass vorzugsweise im mittleren Bereich 15 des Gehäuses 1 ein vorzugsweise elektronischer Kompass 16 oder ein Kreiselkompass 16 angeordnet ist. Hier sind auch andere Varianten denkbar. Beispielsweise können hier Neigungssensoren o. dgl. Anwendung finden.

Weitere Versuche mit sehbehinderten Probanten haben ergeben, dass auf einen Blindenstock heutzutage (noch) nicht verzichtet werden kann. Sehbehinderte Personen sind schon zu lange an die Verwendung eines Blindenstocks, der üblicherweise als Taststock ausgestaltet ist, gewöhnt. Daher ist es vorzugsweise vorgesehen, dass das Gehäuse 1 am vorzugsweise vorderen Ende 10 einen Anschlussstutzen 17 für einen Taststock 18 aufweist.

Der Darstellung in Fig. 2 lässt sich der grundsätzliche Aufbau des tragbaren Anzeigegeräts in einer bevorzugten Ausgestaltung entnehmen. Das Gehäuse 1 ist hier im Wesentlichen zweiteilig ausgestaltet. Im mittleren Bereich ist neben dem Kompass 16 auch die Energieversorgung in Form von Akkus 19 angeordnet. Durch die knochenartige Ausgestaltung des Gehäuses 1 können am vorderen Ende 10 und an hinteren Ende 13 die oben beschriebenen zusätzlichen Komponenten angeordnet werden. Die dargestellte Struktur des tragbaren Anzeigegeräts führt zu einer hohen Kompaktheit und gleichzeitig zu geringen Realisierungskosten durch die geringe Teileanzahl.

Alternativ oder zusätzlich zu der Energieversorgung in Form von Akkus 19 kann eine Stromgeneratoranordnung vorgesehen sein. Ein Beispiel hierfür ist ein Dynamo, der mit einer Kurbel angetrieben wird. Ein anderes Beispiel besteht in der Umwandlung der Körperwärme des Benutzers durch entsprechende elektronische Bauelemente. Denkbar ist hier auch die Nutzung der kinetischen Energie, die bei der Bewegung des Anzeigegeräts entsteht.

In besonders bevorzugter Ausgestaltung ist das Anzeigegerät an die Fähigkeiten und Eigenschaften des Benutzers anpassbar. Dies betrifft insbesondere die Verstellcharakteristik des Tastelements 2. Beispielsweise können die Verstellgeschwindigkeit des Tastelements 2 sowie dessen maximale Auslenkung unterschiedlich konfiguriert werden.

In weiter bevorzugter Ausgestaltung ist es vorgesehen, dass Daten, beispielsweise Kartendaten oder eingelernte Daten, zwischen zwei Anzeigegeräten austauschbar sind. Hierfür ist das Anzeigegerät vorzugsweise mit einer Infrarotschnittstelle o. dgl. ausgestattet.

Das Tastelement 2 dient auch zur Eingabe, und nicht nur zur Anzeige von Information.

Sofern das Tastelement 2 auch zur Eingabe von Informationen dienen soll, ist es vorzugsweise so, dass das Tastelement 2 manuell benutzergeführt verstellbar ist und dass eine Sensoranordnung zur Detektion einer manuellen benutzergeführten Verstellung des Tastelements 2 vorgesehen ist. Ein manuelles Verschwenken des Tastelements 2 lässt sich dann also sensorisch erfassen. Das kann bei der im Folgenden beschriebenen Master-Slave-Anordnung vorteilhaft sein.

Vorschlagsgemäß ist es nun vorgesehen, dass grundsätzlich zwei oben genannte Anzeigegeräte parallel im Einsatz sind. Das eine Anzeigegerät wird dabei als Mastergerät bezeichnet, während das andere Anzeigegerät als Slavegerät bezeichnet wird. Dabei ist es so, dass sich das Tastelement 2 des Slavegeräts durch eine manuelle, benutzergeführte Verstellung des Tastelements 2 des Mastergeräts motorisch verstellen lässt. Das Mastergerät dient hier also als Eingabegerät. Man könnte auch sagen, dass das Slavegerät durch das Mastergerät ferngesteuert wird. Damit kann beispielsweise eine sehbehinderte Person mit dem Slavegerät ausgestattet und über das Mastergerät gewissermaßen ferngesteuert werden. Das Mastergerät wird entsprechend von einer nicht sehbehinderten Person bedient. Auf aufwendige Sensoren kann hier vollständig verzichtet werden. Diese Art der "Fernsteuerung" kann auch bei allen anderen denkbaren Anwendungsfällen für das obige Anzeigegerät vorteilhaft sein.

Grundsätzlich kann es sich bei dem Mastergerät um ein oben beschriebenes Anzeigegerät handeln, das zusätzlich der Eingabe von Orientierungsinformationen dient. In diesem Zusammenhang ist es in fertigungstechnischer Hinsicht besonders vorteilhaft, wenn das Mastergerät und das Slavegerät identisch aufgebaut sind. Dann ist ein Schalter o. dgl. vorzusehen, mit dem festgelegt werden kann, ob es sich bei dem jeweiligen Gerät um das Mastergerät oder um das Slavegerät handelt. Bei der identischen Ausgestaltung von Mastergerät und Slavegerät ist die Möglichkeit gegeben, dass die sehbehinderte Person über das Slavegerät ebenfalls Eingaben über das Tastelement tätigen kann, um der nicht sehbehinderten Person bestimmte Rückmeldungen zu geben.

In allen Fällen ist es so, dass sich das Tastelement 2 des Slavegeräts durch eine manuelle, benutzergeführte Verstellung des Tastelements 2 des Mastergeräts ferngesteuert motorisch verstellen lässt. Soll die sehbehinderte Person beispielsweise nach links geführt werden, so verschwenkt die nicht sehbehinderte Person das Tastelement 2 am Mastergerät nach links, was anschließend zu einem entsprechenden Verschwenken des Tastelements 2 des Slavegeräts nach links führt. Diese haptische Anzeige wird von der sehbehinderten Person registriert, so dass sie ihre Bewegungsrichtung entsprechend nach links ändern kann. Bei dieser Fernsteuerung handelt es sich vorzugsweise um eine drahtlose Fernsteuerung, die beispielsweise auf Funk, Infrarot o. dgl. basiert. Für die Realisierung der Fernsteuerung weisen das Mastergerät und das Slavegerät jeweils eine Kommunikationsanordnung auf, mit der eine Datenverbindung zwischen den beiden Geräten aufgebaut werden kann.

Eine manuelle benutzergeführte Verstellung des Tastelements 2 des Mastergeräts wird von der dem Tastelement 2 zugeordneten Sensoranordnung detektiert und über die Kommunikationsanordnung an das Slavegerät übermittelt. Das Tastelement 2 des Slavegeräts wird mittels der zugeordneten Antriebsanordnung 3 entsprechend verstellt, so dass die eingegebene Orientierungsinformation am Slave gerät haptisch angezeigt wird. Dabei ist es vorzugsweise so, dass eine Verstellung des Tastelements 2 am Mastergerät zu einer identischen Verstellung des Tastelements 2 auf dem Slavegerät führt. Es ist aber auch denkbar, dass hier unterschiedliche Empfindlichkeiten einstellbar sind.

In bevorzugter Ausgestaltung ist das motorische Verschwenken des Tastelements 2 um die Hochachse 4 einer Richtungsinformation zugeordnet, wobei das motorische Verschwenken des Tastelements 2 um die Querachse vorzugsweise einer Kollisions- und/oder Oberflächeninformation zugeordnet ist.

Entsprechend ist vorzugsweise ein Navigationsmodul vorgesehen, wobei Richtungsinformationen vom Navigationsmodul über das motorische Verschwenken des Tastelements 2 um die Hochachse 4 abgebbar sind.

Alternativ oder zusätzlich kann ein Kollisionsvermeidungsmodul vorgesehen sein, wobei Kollisions- und Oberflächeninformationen vom Kollisionsvermeidungsmodul über das motorische Verschwenken des Tastelements 2 um die Querachse 5 abgebbar sind.

Die oben beschriebene haptische Anzeige über das Tastelement 2 kann ergänzt werden durch andere Anzeigen wie Sprachausgabe, Tonausgabe o. dgl. Es kann auch vorgesehen sein, dass das motorische Verstellen des Tastelements 2 impulsartig erfolgt, wodurch über die Impulsform und -länge ebenfalls zusätzliche Informationen an den Benutzer abgebbar sind. Bei drohender Kollisionsgefahr kann es vorgesehen sein, dass das Verschwenken des Tastelements 2 um die Querachse in kurzen - und damit alarmierenden - Impulsen durchgeführt wird. Bei einer weiteren bevorzugten Ausgestaltung werden solche zusätzlichen Informationen durch die Verstellgeschwingigkeit und/oder den Verstellweg des Tastelements 2 angezeigt. Damit lassen sich die gewünschten Informationen stufenlos und damit sehr präzise anzeigen. Es ist ferner denkbar, dass das Anzeigegerät mit einem Vibrationsgenerator ausgestattet ist, um diese zusätzlichen Informationen an den Benutzer abzugeben.

Nach der vorschlagsgemäßen Lehre lässt sich das Tastelement 2 des Slavegeräts durch eine manuelle, benutzergeführte Verstellung des Tastelements 2 des Mastergeräts ferngesteuert motorisch verstellen. Das Tastelement 2 der beiden Geräte kann wie oben beschrieben, muss aber nicht in mehreren Freiheitsgraden verstellbar sein. Denkbar ist eine Verschwenkbarkeit der Tastelemente 2 zur haptischen Anzeige bzw. Eingabe von Richtungsinformationen ausschließlich um eine Hochachse 4. Hinsichtlich der Ausgestaltung des Mastergeräts und des Slavegeräts darf in vollem Umfange auf die obigen Ausführungen verwiesen werden.

Es darf darauf hingewiesen werden, dass sich das tragbare Anzeigegerät für die Unterstützung sehbehinderter Personen eignet. Dies gilt insbesondere dann, wenn die sehbehinderte Person zusätzlich ein nur eingeschränktes Hörvermögen aufweist. Grundsätzlich ist das tragbare Anzeigegerät aber für jeden Bereich anwendbar, in dem unzureichende visuelle Informationen vorliegen. Als Beispiel wurde die Unterstützung von Feuerwehrleuten bei hoher Rauchentwicklung genannt. Andere Beispiele sind die Unterstützung von Tauchern, Seglern oder aber Piloten, wenn unzureichende Sichtverhältnisse herrschen. Das Anzeigegerät kann grundsätzlich auch als Anzeigegerät für einen Personal Computer o. dgl. dienen, beispielsweise im Rahmen der Vorbereitung einer sehbehinderten Person auf die abzulaufende Wegstrecke, oder aber im Rahmen eines Computerspiels.

Letztlich kann das tragbare Anzeigegerät also mit beliebigen Geräten gekoppelt werden, die Orientierungsinformationen jeglicher Art liefern. Insoweit handelt es sich bei dem Anzeigegerät vorzugsweise um eine Add-On-Komponente, beispielsweise für GPS-Navigationssysteme o. dgl.

Es darf schließlich darauf hingewiesen werden, dass das obige Anzeigegerät, die Mobilitätshilfe sowie die Mobilitätshilfsanordnung diesseits auch als Personal Travel Assistant (PETRA) bezeichnet werden.

## Patentansprüche

1. Tragbare Mobilitätshilfsanordnung mit einem Slavegerät und einem Mastergerät, wobei das Slavegerät ein tragbares Anzeigegerät zur haptischen Anzeige und. ggf. Eingabe von Orientierungsinformationen und das Mastergerät ein weiteres Gerät zur haptischen Eingabe und ggf. Anzeige von Orientierungsinformationen ist, wobei das Slavegerät und das Mastergerät zur Anzeige bzw. Eingabe von Orientierungsinformationen jeweils ein Tastelement (2) aufweisen, wobei sich das Tastelement (2) des Slavegeräts durch eine manuelle, benutzergeführte Verstellung des Tastelements (2) des Mastergeräts ferngesteuert motorisch verstellen lässt,
**dadurch gekennzeichnet,**
**dass** das Mastergerät tragbar ausgestaltet ist, dass das Tastelement des Mastergeräts und das Tastelement des Slavegeräts schwenkbar sind, dass das Mastergerät und das Slavegerät identisch aufgebaut sind, dass ein Schalter oder dergleichen vorgesehen ist, mit dem festgelegt werden kann, ob es sich bei dem jeweiligen Gerät um das Mastergerät oder um das Slavegerät handelt und dass eine schwenkende Verstellung des Tastelements (2) am Mastergerät abgesehen von einer ggf. vorgegebenen Einstellbarkeit unterschiedlicher Empfindlichkeiten zu einer identischen schwenkenden Verstellung des Tastelements (2) auf dem Slavegerät führt.

2. Tragbare Mobilitätshilfsanordnung nach Anspruch 1, **dadurch gekennzeichnet, dass** das Tastelement (2) zur Anzeige von Orientierungsinformationen um eine Hochachse (4)schwenkbar ausgestaltet ist.

3. Tragbare Mobilitätshilfsanordnung nach Anspruch 1. oder 2, **dadurch gekennzeichnet, dass** das Mastergerät und das Slavegerät jeweils eine Kommunikationsanordnung aufweisen, mit der eine Datenverbindung zwischen den beiden Geräten aufgebaut werden kann, vorzugsweise, dass die Datenverbindung drahtlos vorgesehen ist und beispielsweise auf Funk, Infrarot oder dergleichen basiert.

4. Verwendung einer tragbaren Mobilitätshilfsanordnung nach einem der Ansprüche 1 bis 3 zur Führung einer sehbehinderten Person durch eine nicht-sehbehinderte Person, wobei das Slavegerät für die Bedienung durch die sehbehinderte Person und das Mastergerät für die Bedienung durch die nicht-sehbehinderte Person vorgesehen ist.

## Claims

1. Portable mobility aid arrangement having a slave unit and a master unit, the slave unit being a portable indicator for haptic indication and, if appropriate, input of orientation information, and the master unit being a further unit for haptic input and, if appropriate, indication of orientation information, the slave unit and the master unit respectively having a sensing element (2) for indicating or inputting orientation information, a remotely controlled motorized adjustment of the sensing element (2) of the slave unit being possible by a manual, user-prompted adjustment of the sensing element (2) of the master unit, **characterized in that** the master unit is of portable configuration, **in that** the sensing element of the master unit and the sensing element of the slave unit are pivotable, **in that** the master unit and the slave unit are of identical construction, **in that** a switch or the like is provided with the aid of which it can be determined whether the respective unit is the master unit or the slave unit, and **in that**, apart from a possibly prescribed adjustability of different sensitivities, a pivoting adjustment of the sensing element (2) on the master unit leads to an identical pivoting adjustment of the sensing element (2) on the slave unit.

2. Portable mobility aid arrangement according to Claim 1, **characterized in that** the sensing element (2) is pivotably configured to indicate orientation information about a vertical axis (4).

3. Portable mobility aid arrangement according to claim 1 or 2, **characterized in that** the master unit and the slave unit respectively have a communication arrangement with the aid of which a data connection can be established between the two units, preferably **in that** the data connection is provided without wires and is based, for example, on radio, infrared or the like.

4. Use of a portable mobility aid arrangement according to one of Claims 1 to 3 for guiding a visually impaired person by a non-visually impaired person, in which the slave unit is provided for operation by the visually impaired person, and the master unit is provided for operation by the non-visually impaired person.

## Revendications

1. Arrangement portable d'aide à la mobilité comprenant un appareil esclave et un appareil maître, l'appareil esclave étant un appareil indicateur portable pour l'indication sensorielle et éventuellement la saisie d'informations d'orientation et l'appareil maître étant un autre appareil de saisie et éventuellement d'indication sensorielle d'informations d'orientation, l'appareil esclave et l'appareil maître présentant respectivement un élément de palpage (2) pour l'indication ou la saisie d'informations d'orientation, l'élément de palpage (2) de l'appareil esclave pouvant être positionné par commande à distance motorisée par un positionnement manuel guidé par l'utilisateur de l'élément de palpage (2) de l'appareil maître,
**caractérisé en ce**
**que** l'appareil maître est réalisé sous forme portable, en ce que l'élément de palpage de l'appareil maître et l'élément de palpage de l'appareil esclave sont pivotants, en ce que l'appareil maître et l'appareil esclave sont construits à l'identique, en ce qu'il est prévu un commutateur ou similaire avec lequel il est possible de définir si l'appareil respectif est l'appareil maître ou l'appareil esclave et en ce qu'un positionnement pivotant de l'élément de palpage (2) sur l'appareil maître, exception faite d'une éventuelle possibilité de réglage de sensibilités différentes, provoque un positionnement pivotant identique de l'élément de palpage (2) sur l'appareil esclave.

2. Arrangement portable d'aide à la mobilité selon la revendication 1, **caractérisé en ce que** l'élément de palpage (2) est configuré pour pivoter autour d'un axe de hauteur (4) pour l'indication d'informations d'orientation.

3. Arrangement portable d'aide à la mobilité selon la revendication 1 ou 2, **caractérisé en ce que** l'appareil martre et l'appareil esclave présentent respectivement un arrangement de communication avec lequel peut être établie une liaison de données entre les deux appareils, de préférence **en ce que** la liaison de données est prévue sans fil et se base, par exemple, sur la radio, les infrarouges ou similaire.

4. Utilisation d'un arrangement portable d'aide à la mobilité selon l'une des revendications 1 à 3 pour le guidage d'une personne malvoyante par une personne non malvoyante, l'appareil esclave étant prévu pour être utilisé par la personne malvoyante et l'appareil maître étant prévu pour être utilisé par la personne non malvoyante.
